Europäisches Patentamt

European Patent Office

Office européen des brevets

(19)

(11) EP 0 513 313 B1

(12) FASCICULE DE BREVET EUROPEEN

(45) Date de publication et mention
de la délivrance du brevet:
**12.02.1997   Bulletin 1997/07**

(21) Numéro de dépôt: **92901024.7**

(22) Date de dépôt: **29.11.1991**

(51) Int Cl.$^6$: **H04L 5/06**

(86) Numéro de dépôt international:
**PCT/FR91/00951**

**WO 92/10043 (11.06.1992 Gazette 1992/13)**

(54) **PROCEDE DE RECALAGE DES OSCILLATEURS LOCAUX D'UN RECEPTEUR ET DISPOSITIF POUR LA MISE EN UVRE DU PROCEDE**

VERFAHREN ZUR NEUSYNCHRONISIERUNG DER LOKALEN OSZILLATOREN EINES EMPFÄNGERS UND VORRICHTUNG ZUR DURCHFÜHRUNG DES VERFAHRENS

METHOD FOR RESETTING THE LOCAL OSCILLATORS OF A RECEIVER AND DEVICE FOR IMPLEMENTING SUCH METHOD

(84) Etats contractants désignés:
**AT CH DE DK ES FR GB IT LI NL SE**

(30) Priorité: **30.11.1990  FR 9015015**

(43) Date de publication de la demande:
**19.11.1992   Bulletin 1992/47**

(73) Titulaire: **THOMSON multimedia
92400 Courbevoie (FR)**

(72) Inventeurs:
• **FOUCHE, Yvon
  F-92045 Paris-La Défense Cédex 67 (FR)**
• **RAULT, Jean-Bernard
  F-92045 Paris-La Défense Cédex 67 (FR)**
• **DE COUASNON, Tristan
  F-92045 Paris-La Défense Cédex 67 (FR)**

• **MONNIER, Raoul
  F-92045 Paris-La Défense Cédex 67 (FR)**

(74) Mandataire: **Ruellan-Lemonnier, Brigitte et al
THOMSON Multimedia,
9 Place des Vosges
La Défense 5
92050 Paris La Défense (FR)**

(56) Documents cités:
EP-A- 0 365 431          WO-A-90/04893
GB-A- 2 145 906

• IEEE GLOBAL TELCOMMUNICATIONS
  CONFERENCE vol. 3, Novembre 1984, ATLANTA
  pages 1553 - 1557; BOTARO HIROSAKI ET AL.:
  'A HIGHLY EFFICIENT HF MODEM WITH
  ADAPTIVE CONTROL ALGORITHM'

**Description**

La présente invention concerne le recalage des oscillateurs locaux d'un récepteur permettant de recevoir un signal modulé par au moins un circuit de calcul de Transformée de Fourier rapide inverse selon une modulation multiporteuse de type OFDM (pour Orthogonal Frequency Division Multiplexing en langue anglaise).

Dans la demande de brevet EP-A-0 365 431 déposée au nom de THOMSON-CSF, on a décrit un procédé pour émettre des ondes modulées utilisant simultanément une pluralité de fréquences comportant des étapes successives d'émission de symboles pendant une durée $T + \Delta T$, deux fréquences d'émission étant distantes de $1/T$, T étant l'intervalle utile d'émission et $\Delta T$ étant l'intervalle de transition. Dans la demande de brevet ci-dessus, on a aussi décrit un émetteur et un récepteur permettant la mise en oeuvre de ce procédé en utilisant dans l'émetteur un circuit de calcul de transformée de Fourier rapide inverse ($FFT^{-1}$) pour réaliser la modulation du signal et dans le récepteur un circuit de calcul de Transformée de Fourier rapide (FFT) pour réaliser la démodulation du signal reçu. D'autre part, pour permettre la synchronisation du récepteur sur l'émetteur, le spectre du signal modulé comporte deux raies pilotes présentant entre elles une différence de fréquence fixe. En utilisant ces deux raies pilotes, il est possible d'asservir les oscillateurs locaux ainsi que l'horloge d'échantillonnage du récepteur. Dans la demande de brevet mentionnée ci-dessus, on a donc décrit un dispositif d'asservissement analogique utilisant les deux raies pilotes pour asservir certains oscillateurs locaux du récepteur ainsi que l'horloge donnant la fréquence d'échantillonnage.

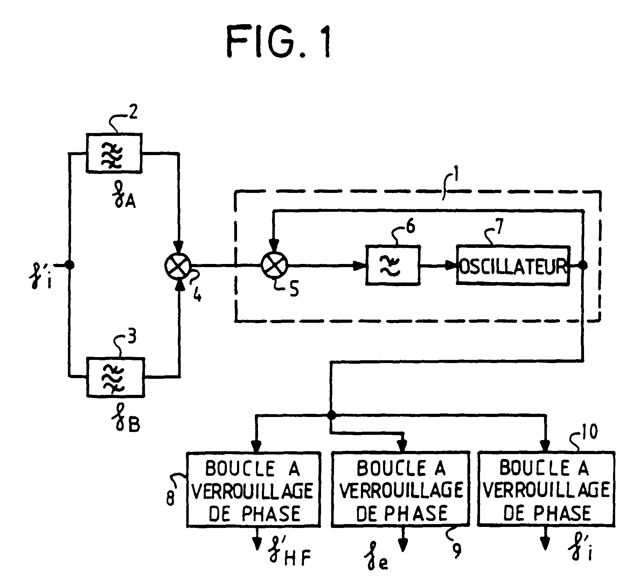

Comme représenté sur la figure 1, le dispositif d'asservissement permettant de réaliser le recalage des oscillateurs locaux du récepteur décrit dans la demande de brevet mentionnée ci-dessus, comporte essentiellement un filtre passe-bande 2, un filtre passe-bande 3, un mélangeur 4 et une boucle à verrouillage de phase 1 (PLL en langue anglaise) générant une fréquence de référence pour trois autres PLL. Les deux filtres 2 et 3 sont connectés en parallèle et reçoivent, entre autre, en entrée deux fréquences $f_A$, $f_B$, issues du circuit de transposition de la Fréquence Intermédiaire en Bande de base, comme cela est expliqué dans la demande ci-dessus. Les sorties des deux filtres passe-bande 2 et 3 sont envoyées sur le mélangeur 4. La sortie du mélangeur 4 est envoyée en entrée de la boucle à verrouillage de phase 1. Cette boucle à verrouillage de phase comporte un mélangeur 5 dont la sortie est reliée à l'entrée d'un filtre passe-bas 6. La sortie du filtre passe-bas 6 est connectée à un oscillateur commandé par une tension 7 (VCO en langue anglaise). La sortie de l'oscillateur 7 est reliée à l'entrée de la boucle à verrouillage de phase, à savoir sur l'autre entrée du mélangeur 5. La sortie de la boucle à verrrouillage de phase 1 est aussi envoyée en entrée de trois boucles à verrouillage de phase 8, 9, 10. Ces boucles à verrouillage de phase sont des boucles à verrouillage de phase à division de fréquence. Les boucles à verrouillage de phase 8, 9, 10 constituent les sorties du dispositif d'asservissement et fournissent des références de fréquences aux différents oscillateurs locaux, à savoir l'oscillateur local du circuit de transposition haute fréquence-fréquence intermédiaire $f'_{HF}$, l'horloge d'échantillonnage $f_e$, l'osciiiateur local du circuit de transposition Fréquence Intermédiaire en bande de base $f'_i$.

Le circuit décrit ci-dessus fonctionne de la manière suivante. Le filtre 2 sélectionne la fréquence $f_A$ à savoir la fréquence d'une des deux raies pilotes émises par l'émetteur. Le filtre 3 sélectionne la fréquence $f_B$ à savoir la fréquence de l'autre raie pilote. Le mélangeur 4 effectue le battement entre les fréquences $f_A$ et $f_B$. La boucle à verrouillage de phase 1 fournie la valeur des différences entre fréquences $f_A$ et $f_B$. La différence entre les fréquences $f_A$ et $f_B$ à l'émission, déterminée par le standard d'émission, est connue. La comparaison à la réception permet de fournir une référence de fréquence et de phase. Les boucles à verrouillage de phase 8, 9 et 10 fournissent donc des références de fréquence et de phase aux différents oscillateurs locaux et à l'horloge d'échantillonnage utilisés dans le récepteur.

La présente invention a pour but de proposer un nouveau procédé de recalage des oscillateurs locaux du récepteur permettant un fonctionnement entièrement numérique ainsi qu'un dispositif pour la mise en oeuvre du procédé.

Ces nouveaux procédé et dispositif permettent d'abaisser la complexité du système de récupération d'horloge au niveau du récepteur ce qui diminue son prix.

La présente invention a pour objet un procédé de recalage des oscillateurs d'un récepteur comportant un oscillateur de transposition haute fréquence-fréquence intermédiaire, un oscillateur de transposition fréquence intermédiaire-bande de base, un oscillateur d'échantillonnage et recevant un signal modulé par au moins un circuit de calcul de transformée de Fourier rapide inverse ($FFT^{-1}$) selon une modulation multiporteuses de type OFDM (Orthogonal Frequency Division Multiplexing en langue anglaise) le spectre dudit signal comportant deux raies pilotes présentant entre elles une différence de fréquences fixe, le procédé étant caractérisé par le calcul de la variation des phases des deux raies en fonction du temps à l'aide d'une Transformée de Fourier rapide à la réception, lesdits ocsillateurs étant réglables en fréquence et le résultat dudit calcul servant à ajuster la fréquence de l'oscillateur d'échantillonnage et la fréquence de l'un au moins des deux autres oscillateurs.

D'autres caractéristiques et avantages de la présente invention apparaîtront à la lecture de la description faite ci-après d'un mode de réalisation préférentiel d'un dispositif mettant en oeuvre la présente invention, cette description étant faite avec référence aux dessins ci-annexés dans lesquels :

- la figure 1 déjà décrite est un schéma synoptique d'un mode de réalisation d'un dispositif d'asservissement permettant le recalage des oscillateurs locaux d'un récepteur selon l'art antérieur ;

- la figure 2 est un schéma synoptique d'un mode de réalisation d'un récepteur dans lequel peut être mise en oeuvre la présente invention ;
- la figure 3 est un schéma expliquant la mise en oeuvre du procédé de la présente invention, et
- la figure 4 est un autre schéma expliquant la mise en oeuvre du procédé de la présente invention.

Pour simplifier la description, sur les figures l'on a utilisé les mêmes références pour désigner les mêmes éléments.

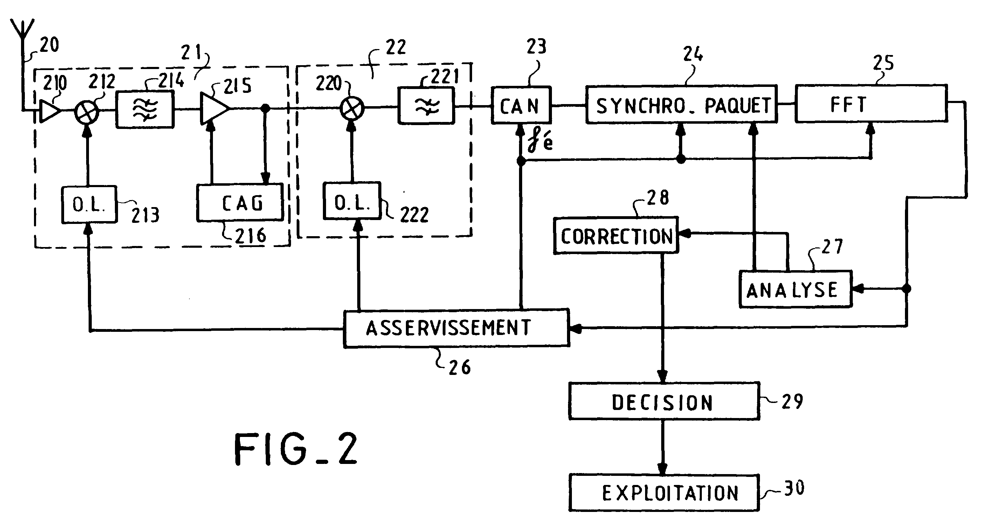

Le procédé de recalage des oscillateurs locaux conforme à la présente invention peut être mis en oeuvre dans un récepteur tel que représenté à la figure 2. Ce récepteur comporte donc de manière connue une antenne de réception 20, un circuit récepteur 21 transformant principalement la fréquence de réception en une fréquence intermédiaire, un circuit de transposition 22 transformant la fréquence intermédiaire en une fréquence en bande de base, un convertisseur analogique numérique 23, un circuit de synchronisation paquet 24, un circuit de démodulation 25 constitué par un circuit de transformée de Fourier rapide, un circuit d'asservissement 26, un circuit d'analyse 27, un circuit de correction 28, un circuit de décision 29 et un circuit d'exploitation 30. Ces différents circuits ainsi que leur fonctionnement ont été décrits dans la demande de brevet international PCT/FR 89/00546. De manière plus spécifique, le récepteur 21 comporte un amplificateur 210 amplifiant le signal issu de l'antenne 20. La sortie de l'amplificateur 210 est connectée à la première entrée d'un mélangeur 214 dont l'autre entrée reçoit une fréquence issue d'un oscillateur local 213. La sortie du mélangeur 212 est connectée à l'entrée d'un filtre passe-bande 214. La sortie du filtre passe-bande 214 est connectée à l'entrée d'un amplificateur 215 qui comporte une boucle de contre-réaction avec un circuit de contrôle automatique de gain 216. Dans ce circuit, l'amplificateur 210 amplifie le signal capté par l'antenne 20. Par battement avec un signal haute fréquence fourni par l'oscillateur local 213, le mélangeur 212 abaisse la fréquence du signal reçu. Le signal en sortie du mélangeur est filtré par le filtre 214, ce qui permet d'éliminer les signaux étrangers aux signaux qu'on veut pouvoir recevoir. L'amplificateur 215 sous contrôle du circuit automatique de gain 216 réalise l'amplification du signal fréquence intermédiaire $f'_i$ obtenu en sortie du circuit 21. Ce signal fréquence intermédiaire est donc envoyé sur un circuit de transposition fréquence intermédiaire en bande de base 22 comportant, comme représenté sur la figure 2, un mélangeur 220 qui reçoit sur une entrée la fréquence intermédiaire amplifiée et sur l'autre entrée la fréquence issue d'un oscillateur local 222. La sortie du mélangeur est envoyée sur un filtre passe-bas 221. Dans ce cas, le mélangeur 220 effectue des battements entre le signal fourni par l'oscillateur 222 et les signaux à la fréquence intermédiaire $f'_i$ et délivre un signal en bande de base. Le filtre 221 sélectionne la partie désirée du spectre de manière à obtenir un signal en bande de base envoyé sur le convertisseur analogique numérique 23. Le convertisseur effectue donc un échantillonnage numérique du signal à la fréquence d'échantillonnage $f'_e$ synchronisée par le dispositif d'asservissement 26. Le circuit synchronisation-paquet 24 permet entre autre de déterminer le début d'un intervalle d'émission, ce qui rend possible la réorthogonalisation des porteuses. Ce type de fonctionnement permet une synchronisation paquets grossière (à quelques échantillons près). Une synchronisation plus fine est réalisée par le circuit d'analyse 27 en examinant la rotation de la phase dans toute la bande. Le circuit de synchronisation-paquet comporte, par exemple, des moyens de soustraction du signal avec un signal retardé d'une durée T. Tant que les deux échantillons sont pris dans un même intervalle d'émission de durée T + ΔT, leur différence est quasi-constante. Cela est vrai pour chaque intervalle d'émission pendant une durée ΔT diminué du temps d'arrivée de l'écho multiple le plus lointain. Par contre, la fluctuation rapide de cette différence indique que les deux échantillons n'appartiennent plus au même intervalle d'émission. Ainsi, à partir de la différence des deux échantillons, on détermine l'instant de changement d'intervalle d'émission et par suite une synchronisation des intervalles d'émission appelée synchronisation-paquet. Ce dispositif de synchronisation-paquet fonctionne à la fréquence d'échantillonnage $f'_e$. D'autre part, dans le mode de réalisation représenté, le circuit de démodulation 25 est constitué par un circuit de calcul de transformée de Fourier rapide. Le récepteur décrit ci-dessus est adapté pour recevoir des signaux modulés dans un émetteur comportant au moins un circuit de calcul de transformée de Fourier rapide inverse. La modulation est une modulation multiporteuses de type OFDM (Orthogonal Frequency Division Multiplexing en langue anglaise) avec addition d'un intervalle de transition Δt au début de chaque intervalle d'émission t, le spectre dudit signal comportant deux raies pilotes K1 et K2 présentant entre elles une différence de fréquence fixe.

On donnera ci-après les éléments mathématiques permettant de mettre en oeuvre le procédé de la présente invention. Ces éléments mathématiques sont donnés en partant des hypothèses suivantes. Pour l'émetteur :

- le nombre de canaux est de 512 ;
- le signal est composé, dans ce cas, de 2048 points, pour une fréquence d'échantillonnage d'émission double de la fréquence de Shannon ;
- l'intervalle de transition correspond alors à 256 échantillons.

Dans ce cas, le signal émis par l'émetteur est donné par l'équation ci-après :

$$S(t) = \sum_{j=-\infty}^{+\infty} \sum_{k=0}^{511} \rho_{j,k} \cos \left[ 2\pi (k+D) \frac{f_e}{N} (t - j\Delta) \right.$$

$$+ \varphi_{j,k} - k \frac{\pi}{4} \left] \times \pi (t - j\Delta) \right.$$

où $\Delta = q \times 2T_e$    $\pi(t) = 1$    $0 \leq t \leq \Delta$
(avec q = 1152, soit 1024+128 dans le présent cas)
    $T_e = 1/f_e$    $\pi(t) = 0$    ailleurs
    N = 2048

D : décalage des porteuses dans le spectre émis,

$\rho_{j,k}\varphi_{j,k}$ est l'information transportée par la k° porteuse pendant l'intervalle de temps [j$\Delta$, (j + 1)$\Delta$] dans laquelle $f_e$ correspond à la fréquence d'échantillonnage et $\Delta$ à l'intervalle d'émission constituée par la partie utile plus l'intervalle de transition.

De manière connue, le signal S(t) subit à l'émission et à la réception un certain nombre de transpositions, à savoir, à l'émission, une transposition bande de base en fréquence intermédiaire $f_i$ et une transposition fréquence intermédiaire haute fréquence donnant la fréquence $f_{HF}$ et à la réception une transposition haute fréquence $f'_{HF}$ en fréquence intermédiaire $f'_i$ et une transposition fréquence intermédiaire $f'_i$ en bande de base. Après transposition, à savoir en entrée du convertisseur analogique numérique 23, on reçoit le signal représenté par l'équation :

$$S'(t) = \sum_{j=-\infty}^{+\infty} \sum_{k=0}^{511} \rho_{j,k} \cos \left[ 2\pi \left[ (k+D) \frac{f_e}{N} + \Delta f_i + \Delta f_{HF} \right] t \right.$$

$$- 2\pi (k+D) \frac{f_e}{N} \times j\Delta + \varphi_{j,k} - k\frac{\pi}{4} \left] \pi (t - j\Delta) \right.$$

avec

$f_i$ :        fréquence intermédiaire d'émission
$f''_i$ :       fréquence intermédiaire de réception
$f^R_i$ :       fréquence intermédiaire de réception théorique,
$f^R_i =$       $f_i - D \dfrac{f_e}{N}$
$f_{HF}$ :       fréquence HF d'émission
$f''_{HF}$ :      fréquence HF de réception

On pose :

$$f'_i = f^R_i (1 + \delta_2) = (f_i - D \frac{f_e}{N}) (1 + \delta_2)$$

$$\Delta f_i = f'_i - f_i = \delta_2 f^R_i - D \frac{f_e}{N}$$

$$f'_{HF} = f_{HF} (1 + \delta_3)$$

$$\Delta f_{HF} = f'_{HF} - f_{HF} = \delta_3 f_{HF}$$

et il vient

$$S'(t) = \sum_{j=-\infty}^{+\infty} \sum_{k=0}^{511} \rho_{j,k}$$

$$\cos\left[2\pi\left[(k + N\left(\frac{\delta_2 f_1^R + \delta_3 f_{HF}}{f_e}\right))\right]f_e t\right.$$

$$\left. - 2\pi k \frac{f_e}{N} j \Delta + \varphi_{j,k} - k \frac{\pi}{4}\right] \pi (t - j\Delta)$$

On échantillonne à la fréquence $f'_e = \frac{f_e}{2}(1 + \delta_1)$

(dans les équations ci-dessus $\delta_1$, $\delta_2$, $\delta_3$ représentent les décalages de fréquence que l'on cherche à compenser).

En sortie du convertisseur analogique numérique 23, on obtient le signal représenté par la formule :

$$S'(n) = S'(t = nT'_e + \delta_e)$$

$$= \sum_{j=-\infty}^{+\infty} \sum_{k=0}^{511} \rho_{j,k} \cos\left[\frac{2\pi}{N}\left[k + N\left(\frac{\delta_2 f_1^R + \delta_3 f_{HF}}{f_e}\right) f_e(nT'_e) + \delta_e\right)\right.$$

$$\left. - 2\pi k \frac{f_e}{N} j \Delta + \varphi_{j,k} - k \frac{\pi}{4}\right] \pi (nT'_e + \delta_e - j\Delta)$$

on se place à un échantillon n correspondant à un début de paquet émis, par exemple le $j^{ème}$.
Il faut

$$\begin{cases} (n-1) T'_e < j\Delta - \delta_e \\ nT'_e \geq j_0 - \delta_e \end{cases}$$

Dans ce cas, on récupère l'information émise pour le bloc n° j et en numérotant les échantillons de 0 à 1151 à partir de n on obtient :

$$s'(n+i) = \sum_{\substack{i=0,\ldots 1151}} \sum_{k=0}^{511} \rho_{j,k} \cos\left[k + N\left(\frac{\delta_2 f_1^R + \delta_3 f_{HF}}{f_e}\right)\right](n+i) f_e T'_e$$

$$- 2\pi k \frac{f_e}{N} j \Delta + \varphi_{j,k} - K \frac{\pi}{4} + \frac{2\pi}{N}\left[k + N\left(\frac{\delta_2 f_1^R + \delta_3 f_{HF}}{f_e}\right)\right] f_e \delta_e$$

On a : $T'_e = \frac{1}{f'_e} = \frac{2T_e}{1 + \delta_1}$, et on pose $N' = 1024 = \frac{N}{2}$
Alors

$$s'(n+i) = \sum_{k=0}^{511} \rho_{j,k} \cos \left[ \frac{2\pi}{N'} \left[ k + N \left( \frac{\delta_2 f_i^R + \delta_3 f_{HF}}{f_e} \right) \right] \right.$$

$$\frac{(n+i)}{(1+\delta_1)} - 2\pi k \frac{f_e}{N} \times 1152 \times 2 \times T_e \times j + \varphi_{j,k} - k \frac{\pi}{4}$$

$$+ 2\pi \left[ K \frac{f_e}{N} + (\delta_2 f_i^R + \delta_3 f_{HF}) \right] \delta_e$$

$$= \sum_{k=0}^{511} \rho_{j,k} \cos \left[ \frac{2\pi}{N'} \left[ k + N \left( \frac{\delta_2 f_i^R + \delta_3 f_{HF}}{f_e} \right) \right] i / 1 + \delta_1 \right.$$

$$+ \frac{2\pi}{N'} \left[ k + N \left( \frac{\delta_2 f_i^R + \delta_3 f_{HF}}{f_e} \right) \right] n / 1 + \delta_1$$

$$- \frac{2\pi}{N'} k \times 1152 \times j + \varphi_{j,k} - k \frac{\pi}{4} + 2\pi \left[ k \frac{f_e}{N} \right.$$

$$+ (\delta_2 f_i^R + \delta_3 f_{HF}) \right] \delta_e \right]$$

On pose :

$$K' = (k + \frac{N}{fe} ( \delta_2 f_i^R + \delta_3 f_{HF}) \frac{1}{1+\delta_1}$$

Alors:

$$s'(n+1) = \sum_{0}^{511} \rho_{j,k} \cos \left[ \frac{2\pi}{N'} k' . i + \frac{2\pi}{N'} [k' . n - k.1152 j] \right.$$
$$+ \varphi_{j,k} - k \frac{\pi}{4} + 2\pi \frac{f_e}{N} (1 + \delta_1) k' \delta_e ) \right]$$

avec $i = 0, \ldots 1151$

On se décale de 128 échantillons, soit :

$$s'(n+i+128) = \sum_{0}^{511} \varphi_{j,k} \cos \left[ \frac{2\pi}{N'} k' . i + \frac{2\pi}{N'} [k' . n - k.1152 j] \right.$$
$$+ \varphi_{j,k} + \frac{\pi}{4} [k' - k] + 2\pi \frac{f_e}{N} (1 + \delta_1) k' \delta_e ) \right]$$

avec $i = 0, \ldots 1023$

La démodulation par le circuit de calcul de transformée de Fourier rapide donne :

$$\rho'_{j,k} \simeq \rho_{j,k}$$

$$\varphi'_{j,k} \simeq \varphi_{j,k} + \frac{2\pi}{N'} [K' n - K1152_j] + \frac{\pi}{4} [K' - K]$$

$$+ 2\pi \frac{f_e}{N} (1 + \delta_1) K'\delta_e$$

$\rho$ représentant l'amplitude et $\varphi$ la phase des échantillons. Le signe "$\simeq$" vient du fait que $K' \simeq K$ et que le circuit FFT de réception est décalé.

Si on examine le signal 1 paquets après, soit les échantil lons $(n + l \times 1152 + i + 128, i = 0, ...1023)$, alors $n \dashrightarrow n + l \times 1152$ et $j \dashrightarrow j + l$ (on décode l'information du $(j + l)°$paquet).

Le circuit FFT 25 donne :

$$\rho'_{j+l,k} \simeq \rho_{j+l,k} \text{ et } \varphi'_{j+l} \simeq \varphi_{j+l,k} + \frac{2\pi}{N'} [K' (n + l$$

$$+ 152) - K 1152 (j + l)] + \frac{\pi}{4} [K' - K] + 2\pi \frac{f_e}{N} (1 + \delta_1) K'\delta_e$$

Si on calcule $\varphi'_{j+l,k} - \varphi'_{j,k}$, on trouve :

$$\Delta \simeq \varphi_{j+l,k} - \varphi_{j,k} + \frac{2\pi}{N'} [K' - K] \times 1152.l$$

$\frac{2\pi}{N'} [K' - K] \times 1152.l$ représente donc la rotation de phase due au mauvais calage des oscillateurs locaux.

Toutefois, dans le signal d'émission, on a deux porteuses ou raies pilotes, $k_1$ et $k_2$ telles que $\varphi_{j,k1}$ et $\varphi_{j,k2}$ sont constants quelque soit le paquet j. De plus, ces raies étant à phase continue, à savoir sans saut de phase. On peut faire l'analyse n'importe où dans le signal reçu, cela se traduit par les relations :

$k1 + D = n1 \times 32 \qquad$ n, et $n1 \in N$
$k2 + D = n2 \times 32$

Dans ce cas, la différence entre les phases calculées par le circuit FFT pour ces deux raies et pour des données reçues séparées par $1152 \times l$ échantillons est donnée, en posant $k_{1,2} = k_1$ ou $k_2$, par :

$$R (\delta_1, \delta_2, \delta_3, 1, k_{1,2}) = \frac{2\pi}{N'} [K'_{1,2} - K_{1,2}] \times 1152\, 1$$

$$= \frac{2\pi}{N'} \left[ \frac{K_{1,2} + N/f_e (\delta_2 f_i^R + \delta_3)}{(1 + \delta_1)} - K_{1,2} \right] \times 1152 \times 1$$

En développant, on trouve :

$$R (\delta_1, \delta_2, \delta_3, 1, k_{1,2}) = - \frac{2\pi}{N'} \frac{\delta_1}{1 + \delta_1} \times K_{1,2} \times 1152\, 1$$

$$+ 2\pi \times 1152\, 1 \times \frac{2}{1 + \delta_1} \left[ \frac{\delta_2 f_i^R}{f_e} + \frac{\delta_3}{f_e} \right]$$

Si l'on calcule :

$$R (\delta_1, \delta_2, \delta_3, 1, k_1) - R (\delta_1, \delta_2, \delta_3, l, k_2) = \Delta (\delta_1, l)$$

On obtient :

$$\Delta(\delta_1, l) = -\frac{2\pi}{N'}\frac{\delta_1}{(1 + \delta_1)}(k_1 - k_2) \times 1152 \times l$$

$$\simeq -\frac{2\pi}{N'}\delta_1(k_1 - k_2) \times 1152 \times l,$$

donc proportionnel à $\delta_1$

Si par exemple $k_1 > k_2$, alors :

$\Delta(\delta_1, l) < 0 \Longrightarrow \delta_1 > 0$ on diminue $f'_e$

$\Delta(\delta_1, l) > 0 \Longrightarrow \delta_1 < 0$ on augmente $f'_e$

$\Delta(\delta_1, l) = 0 \Longrightarrow \delta_1 = 0$ $f'_e$ bien calée

Si l'on calcule :

$$R(\delta_1, \delta_2, \delta_3, 1, k_1) + R(\delta_1, \delta_2, \delta_3, l, k_2)$$

$$-\frac{k_1 + k_2}{k_1 - k_2}\Delta(\delta_1, l) = \Delta(\delta_1, l)$$

$\frac{k_1 + k_2}{k_1 - k_2}$ étant une constante connue qui ne dépend que des numéros $k_1$ et $k_2$ des porteuses utilisées comme raies pilotes. Ce nombre connu sera donc codé sur n bits (n dépendant de la précision souhaitée) pour une implantation sur D.S.P. (Digital Signal Processor).

On obtient

$$\Delta(\delta_2, \delta_3, 1) = 4 \times 2\pi\left[\delta_2\frac{f_i^R}{f_e} + \delta_3\frac{f_{HF}}{f_e}\right] \times \frac{1}{1 + \delta_1} \times 1152 \times 1$$

$$\simeq 8\pi\left[\delta_2\frac{f_i^R}{f_e} + \delta_3\frac{f_{HF}}{f_e}\right] \times 1152 \times 1$$

si

$$\Delta(\delta_2, \delta_3, 1) < 0 \Longrightarrow \delta_2 < -\delta_3\frac{f_{HF}}{f_i^R}$$

on augmente $f'_i$

$$\Delta(\delta_2, \delta_3, 1) > 0 \Longrightarrow \delta_2 < -\delta_3\frac{f_{HF}}{f_i^R}$$

on diminue $f'$

$$\Delta(\delta_2, \delta_3, 1) = 0 \Longrightarrow \delta_2 = -\delta_3\frac{f_{HF}}{f_i^R}$$

$f'_i$ bien calée

On voit donc qu'en déterminant $\Delta(\delta_1, l)$ et $\Delta(\delta_2, \delta_3, l)$, on peut obtenir des valeurs permettant de jouer sur la fréquence de l'oscillateur d'échantillonnage et la fréquence de l'oscillateur de transposition fréquence intermédiaire-

bande de base.

$$\Delta(\delta_1, 1) = \left[\varphi'_{j+1,k_1} - \varphi'_{j,k_1}\right] - \left[\varphi'_{j+1,k_2} - \varphi'_{j,k_2}\right]$$

$$\Delta(\delta_2, \delta_3, 1) = \left[\varphi'_{j+1,k_1} - \varphi'_{j,k_2}\right] + \left[\varphi'_{j+1,k_2} - \varphi'_{j,k_1}\right]$$
$$- \frac{k_1+k_2}{k_1-k_2} \Delta(\delta_1)$$

où par exemple $\varphi'_{j,k1,2}$ est le terme de phase donnée par le circuit FFT 25 de réception pour la porteuse $k_1$ ou $k_2$ et pour un bloc d'échantillons d'entrée numéroté j quelconque et où $\varphi'_{j+l,k1,k2}$ est alors donnée pour un bloc d'échantillons d'entrée séparé du bloc n° j pour 1152 x l échantillons ;

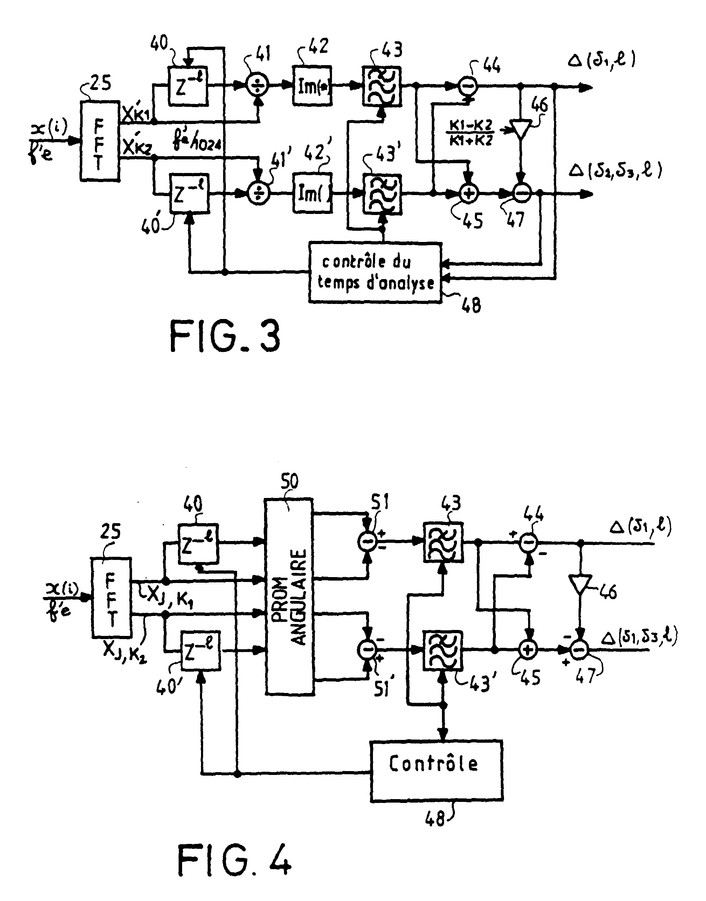

$\Delta(\delta_1, l)$ et $\Delta(\delta_2, \delta_3, l)$ peuvent être obtenus en réalisant les fonctions représentées sur la figure 3. Sur cette figure 3, le circuit FFT 25 permet d'obtenir en sortie la valeur $x'_{k1}$ et $x'_{k2}$ correspondant respectivement aux porteuses $K_1$ et $K_2$. En effet le circuit FFT ne donne pas directement l'amplitude et la phase des porteuses mais les valeurs :
$x'_{j,k1} = \rho'_{j,k1} e^{j\varphi'}j,k1$
$x'_{j,k2} = \rho'_{j,k2} e^{j\varphi'}j,k2$

Comme représenté sur la figure 3, la sortie $x'_{k1}$ du circuit FFT 25 est envoyée respectivement en entrée d'un moyen 40 réalisant un retard de l échantillons et sur l'entrée d'un diviseur 41 qui reçoit sur son autre entrée la sortie du moyen 40. La sortie du diviseur 41 est envoyée sur un circuit 42 prenant la partie imaginaire du signal issu du diviseur 41. En effet, si on considère que l'amplitude des porteuses est constante entre deux mesures, alors :

$$\frac{x'_{j+1,k1}}{x'_{j,k1}} = e + J\left[(\varphi_{j+1,k1} - \varphi_{j,k2})\right]$$

et

$$\frac{x'_{j+l,k2}}{x'_{j,k2}} = e^{j(\varphi_{j+l,k2} - \varphi_{j,k2})}$$

Si la différence des phases est petite (==> faible décalage des oscillateurs locaux), alors on peut écrire :

$$\varphi'_{j+l,k1} - \varphi'_{j,k1} \simeq Im\left[\frac{x'_{j+l,k1}}{x'_{j,k1}}\right]$$

et

$$\varphi'_{j+l,k2} - \varphi'_{j,k2} \simeq Im\left[\frac{x'_{j+l,k2}}{x'_{j,k2}}\right]$$

sinon on utilise une mémoire PROM donnant la tabulation de la fonction comme représenté sur la figure 4 expliqué ci-après.

La sortie du circuit 42 est envoyée sur un passe-bas 43. Il s'agit en fait d'un circuit qui réalise un moyennage sur plusieurs éléments, c'est à dire qui réalise un filtrage de l'information pour éliminer le bruit qui est considéré comme étant à moyenne nulle. La sortie du circuit 43 est envoyée sur un soustracteur 44. De même, le signal $x'_{k2}$ issu du circuit FFT 25 est envoyé sur un moyen 40' réalisant un retard numérique de, par exemple, l paquets de 1152 échantillons. Le signal $X'_{K2}$ est aussi envoyé sur une entrée d'un diviseur 41' qui reçoit sur son autre entrée le signal issu du circuit 40' de manière à réaliser la division:

$$\frac{x'_{j+l,\,k2}}{x'_{j,\,k2}}$$

comme mentionné dans la formule ci-dessus. La sortie du diviseur 41' est envoyée sur un circuit extrayant la partie imaginaire 42'. La sortie du circuit 42' est envoyée sur un filtre passe-bas 43' identique au filtre 43. La sortie du filtre 43' est envoyée respectivement en entrée d'un additionneur 45 qui reçoit sur son autre entrée la sortie du filtre 43 et sur la seconde entrée du soustracteur 44 qui donne en sortie la valeur $\Delta$ ($\delta_1$, l). D'autre part, la sortie du soustracteur 44 est envoyée sur un circuit 46 de manière à multiplier l'élément de sortie par un coefficient $\frac{k_1 - k_2}{k_1 + k_2}$ qui est connu et quantifié sur un nombre de bits suffisant pour assurer une bonne précision.

La sortie du circuit 46 est envoyée sur une des entrées d'un soustracteur 47 qui reçoit sur son autre entrée la sortie de l'additionneur 45. La sortie du soustracteur donne la valeur $\Delta(\delta_2, \delta_3, l)$. D'autre part, les deux valeurs $\Delta$ ($\delta_1$, l) et $\Delta$ ($\delta_2$, $\delta_3$, l) sont utilisées pour réaliser le recalage de la fréquence de l'oscillateur local 222 et de l'oscillateur local d'échantillonnage 31. De plus, les deux valeurs $\Delta$ ($\delta_1$, l) et $\Delta$ ($\delta_2$, $\delta_3$, l) sont aussi envoyées en entrée d'un circuit 48 de contrôle du temps d'analyse. Les sorties du circuit de contrôle de temps d'analyse sont envoyées sur les circuits 40 et 40' pour modifier la valeur de 1 à savoir la valeur du retard numérique mesuré en nombre de paquets de 1152 échantillons et sur les circuits 43 et 43'. En effet, lorsque l'on s'approche des valeurs idéales pour les oscillateurs locaux, les termes $\Delta(\delta_1, l)$ et $\Delta(\delta_2, \delta_3, l)$ ont tendance à devenir de plus en plus faible, sauf si dans le même temps on augmente la valeur de l, c'est-à-dire le temps d'analyse pour permettre aux phases de tourner. Ceci est l'objet du circuit de contrôle du temps d'analyse.

Sur la figure 4, on a représenté une autre manière d'obtenir les termes $\Delta$ ($\delta_1$, l) et $\Delta$ ($\delta_2$, $\delta_3$, l). Cette façon peut être utilisée sans faire d'approximation sur la différence de phase. Sur la figure 4, les mêmes éléments que ceux de la figure 3 portent les mêmes références et ne seront pas redécrits en détail. Sur cette figure, on a remplacé les diviseurs 41 et 41' et les circuits 42 et 42' prenant la partie imaginaire par une mémoire PROM 50 réalisant une transformation cartésienne-polaire permettant d'obtenir $\rho'_{j,k1}$, $\rho'_{j,k2}$ et $\varphi'_{j,k1}$, $\varphi'_{j,k2}$ et par deux soustracteurs 51 et 51'.

Il est évident pour l'homme de l'art que les figures 3 et 4 ne sont données qu'à titre d'exemple.

## Revendications

1. Procédé de recalage des oscillateurs d'un récepteur comportant un oscillateur de transposition haute fréquence-fréquence intermédiaire, un oscillateur de transposition fréquence intermédiaire-bande de base, un oscillateur d'échantillonnage et recevant un signal modulé par au moins un circuit de calcul de Transformée de Fourier rapide inverse FFT$^{-1}$ selon une modulation multiporteuses de type OFDM (Orthogonal Frequency Division Multiplexing en langue anglaise), signal transmis par paquets ou blocs de q échantillons, le spectre dudit signal comportant deux raies pilotes présentant entre elles une différence de fréquences fixe, le procédé étant caractérisé par le calcul de la variation des phases de chacune des deux raies pilotes prises dans deux paquets différents à l'aide d'une Transformée de Fourier rapide à la réception, lesdits oscillateurs étant réglables en fréquence et le résultat dudit calcul servant à ajuster la fréquence de l'oscillateur de l'échantillonnage et la fréquence de l'un au moins des deux autres oscillateurs.

2. Procédé selon la revendication 1, caractérisé en ce que la modification de la fréquence de l'oscillateur de transposition fréquence intermédiaire-bande de base est réalisée en calculant :

$$\Delta(\delta_2, \delta_3, 1) = \left[\varphi'_{j+1,k1} - \varphi'_{j,k1}\right] +$$

$$\left[\varphi'_{j+1,k2} - \varphi'_{j,k2}\right] - \frac{k_1 + k_2}{k_1 - k_2}\,\Delta(\delta_1, 1)$$

dans laquelle $\varphi'_{j,k1}$ et $\varphi'_{j,k2}$ sont respectivement la phase donnée par le circuit de calcul de Transformée de Fourier rapide à la réception pour les porteuses $k_1$ et $k_2$ pour un bloc d'échantillons d'entrée j et $\varphi'_{j+l,k1}$ et $\varphi'_{j+l,k2}$ étant la phase pour un bloc séparé du bloc j par q x l échantillons, et

$$\Delta(\delta_1, l) = \left[\varphi'_{j+l,k1} - \varphi'_{j,k1}\right] - \left[\varphi'_{j+l,k2} - \varphi'_{j,k2}\right]$$

et en modifiant la fréquence en fonction de la valeur de $\Delta(\delta_2, \delta_3, l)$, l'oscillateur étant correctement réglé lorsque : $\Delta(\delta_2, \delta_3, l) = 0$.

3. Procédé selon la revendication 1, caractérisé en ce que la modification de la fréquence de l'oscillateur donnant la fréquence d'échantillonnage est réalisée en calculant :

$$\Delta(\delta_1, l) = \left[\varphi'_{j+l,k1} - \varphi'_{j,k1}\right] - \left[\varphi'_{j+l,k2} - \varphi'_{j,k2}\right]$$

et en modifiant la fréquence en fonction de la valeur de $\Delta(\delta_1, l)$, l'oscillateur étant correctement réglé lorsque $\Delta(\delta_1, l) = 0$.

4. Dispositif de recalage des oscillateurs d'un récepteur comportant un oscillateur de transposition haute fréquence-fréquence intermédiaire, un oscillateur de transposition fréquence intermédiaire-bande de base, un oscillateur d'échantillonnage, un circuit de démodulation par Transformée de Fourier Rapide FFT et recevant un signal modulé par au moins un circuit de calcul de transformée de Fourier rapide inverse FFT$^{-1}$ selon une modulation multiporteuse de type OFDM (Orthogonal Frequency Division Multiplexing en langue anglaise), le spectre dudit signal comportant au moins deux raies pilotes $k_1$ et $k_2$ présentant entre elles une différence de fréquence fixe et un paquet j dudit signal étant constitué de q échantillons, caractérisé en ce qu'il comporte en sortie du circuit FFT :

- des moyens (40,40') pour retarder de q x l échantillons les valeurs $X'_{k1}$ et $X'_{k2}$ issus du circuit FFT (25) et correspondant aux raies pilotes $k_1$ et $k_2$,
  l étant un nombre entier quelconque,
- deux diviseurs (41, 41') réalisant respectivement la division

$$\frac{x'_{j+l,k1}}{x'_{j,k1}} \text{ et } \frac{x'_{j+l,k2}}{x'_{j,k2}}$$

- deux moyens (42, 42') prenant la partie imaginaire des valeurs issues de chaque diviseur,
- un soustracteur (44) soustrayant la valeur issue d'un des moyens prenant la partie imaginaire à la valeur issue de l'autre moyen prenant la partie imaginaire de manière à obtenir

$$\Delta(\delta_1, l) = \left[\varphi'_{j+l,k1} - \varphi'_{j,k1}\right] - \left[\varphi'_{j+l,k2} - \varphi'_{j,k2}\right]$$

- un additionneur (45) additionnant les valeurs issues des deux moyens (42,42') prenant la partie imaginaire,
- un multiplicateur multipliant la valeur $\Delta(\delta_1, l)$ par un coefficient $\frac{k_1 - k_2}{k_1 + k_2}$
- un soustracteur (47) soustrayant la valeur issue du multiplicateur à la valeur issue de l'additionneur de manière à obtenir

$$\Delta(\delta_2,\delta_3,l) = \left[\varphi'_{j+1,k1} - \varphi'_{j,k1}\right] + \left[\varphi'_{j+1,k2} - \varphi'_{j,k2}\right] - \frac{k1+k2}{k1-k2}\Delta(\delta_1,l)$$

5. Dispositif selon la revendication 4, caractérisé en ce qu'il comporte en sortie de chaque moyen prenant la partie imaginaire, un dispositif de moyennage (43, 43').

6. Dispositif selon l'une quelconque des revendications 4 et 5, caractérisé en ce qu'il comporte de plus un circuit de contrôle du temps d'analyse (48) permettant de modifier le temps d'analyse, à savoir la valeur de l.

7. Dispositif selon la revendication 5, caractérisé en ce que les diviseurs et les moyens prenant la partie imaginaire des valeurs issues de chaque diviseur sont remplacés par une mémoire PROM angulaire effectuant la transformation cartésienne-polaire et par deux soustracteurs.

**Patentansprüche**

1. Verfahren zur Nachsynchronisierug der Oszillatoren eines Empfängers, der einen Oszillator zur Umsetzung Hochfrequenz-Zwischenfrequenz, einen Oszillator zur Umsetzung Zwischenfrequenz-Basisband und einen Oszillator zur Abtastung umfaßt und ein Signal empfängt, das durch wenigstens eine Schaltung zur Berechnung der schnellen Fourier-Rücktransformierten FFT$^{-1}$ mittels einer Mehrträger-Modulation vom Typ OFDM (Orthogonal Frequency Division Multiplexing auf Englisch) moduliert wurde, wobei das Signal in Paketen oder Blöcken von q Abtastwerten übertragen wird, wobei das Spektrum des besagten Signals zwei Pilotlinien umfaßt, die untereinander eine feststehende Frequenzdifferenz aufweisen, wobei das Verfahren durch die Berechnung der Änderung der Phasen jeder der zwei in zwei verschiedenen Paketen betrachteten Pilotlinien mit Hilfe einer schnellen Fourier-Transformierten beim Empfang gekennzeichnet ist, wobei die besagten Oszillatoren in der Frequenz einstellbar sind und das Ergebnis der besagten Berechnung dazu dient, die Frequenz des Oszillators zur Abtastung und die Frequenz wenigstens eines der beiden anderen Oszillatoren einzustellen.

2. Verfahren nach Anspruch 1, dadurch gekennzeichnet, daß die Änderung der Frequenz des Oszillators zur Umsetzung Zwischenfrequenz-Basisband vorgenommen wird, indem berechnet wird:

$$\Delta(\delta_2,\delta_3,l) = \left[\varphi'_{j+1,k1} - \varphi'_{j,k1}\right] +$$

$$\left[\varphi'_{j+1,k2} - \varphi'_{j,k2}\right] - \frac{k_1+k_2}{k_1-k_2}\Delta(\delta_1,l)$$

wobei $\varphi'_{j,k1}$ bzw. $\varphi'_{j,k2}$ die Phase ist, die durch die Schaltung zur Berechnung der schnellen Fourier-Transformierten beim Empfang für die Trägerfrequenz $k_1$ bzw. $k_2$ für einen Block von Eingangs-Abtastwerten j geliefert wird, und wobei $\varphi'_{j+1,k1}$ bzw. $\varphi'_{j+1,k2}$ die Phase für einen Block ist, der vom Block j durch q × l Abtastwerte getrennt ist, und

$$\Delta(\delta_1,l) = \left[\varphi'_{j+1,k1} - \varphi'_{j,k1}\right] - \left[\varphi'_{j+1,k2} - \varphi'_{j,k2}\right]$$

und indem die Frequenz in Abhängigkeit von dem Wert von $\Delta(\delta_2, \delta_3, l)$ geändert wird, wobei der Oszillator richtig eingestellt ist, wenn gilt:
$\Delta(\delta_2, \delta_3, l) = 0$.

3. Verfahren nach Anspruch 1, dadurch gekennzeichnet, daß die Änderung der Frequenz des die Abtastfrequenz liefernden Oszillators vorgenommen wird, indem berechnet wird:

$$\Delta(\delta_1, l) = \left[\varphi'_{j+1,k1} - \varphi'_{j,k1}\right] - \left[\varphi'_{j+1,k2} - \varphi'_{j,k2}\right]$$

und indem die Frequenz in Abhängigkeit von dem Wert von $\Delta(\delta_1, l)$ geändert wird, wobei der Oszillator richtig eingestellt ist, wenn gilt:

$\Delta(\delta_1, l) = 0$.

4. Vorrichtung zur Nachsynchronisierug der Oszillatoren eines Empfängers, der einen Oszillator zur Umsetzung Hochfrequenz-Zwischenfrequenz, einen Oszillator zur Umsetzung Zwischenfrequenz-Basisband, einen Oszillator zur Abtastung und eine Schaltung zur Demodulation durch Berechnung der schnellen Fourier-Transformierten FFT umfaßt und ein Signal empfängt, das durch wenigstens eine Schaltung zur Berechnung der schnellen Fourier-Rücktransformierten $FFT^{-1}$ mittels einer Mehrträger-Modulation vom Typ OFDM (Orthogonal Frequency Division Multiplexing auf Englisch) moduliert wurde, wobei das Spektrum des besagten Signals wenigstens zwei Pilotlinien $k_1$ und $k_2$ umfaßt, die untereinander eine feststehende Frequenzdifferenz aufweisen, und wobei ein Paket j des besagten Signals aus q Abtastwerten besteht, dadurch gekennzeichnet, daß sie am Ausgang der FFT-Schaltung folgendes umfaßt:

- Mittel (40, 40') zur Verzögerung der von der FFT-Schaltung (25) gelieferten und den Pilotlinien $k_1$ und $k_2$ entsprechenden Werte $x'_{k1}$ und $x'_{k2}$ um q $\times$ l Abtastwerte,
  wobei l eine beliebige ganze Zahl ist,
- zwei Divisionsschaltungen (41, 41'), welche die Division

$$\frac{x'_{j+l,k1}}{x'_{j,k1}} \quad bzw. \quad \frac{x'_{j+l,k2}}{x'_{j,k2}}$$

ausführen,
- zwei Mittel (42, 42'), die den Imaginärteil der von jeder Divisionsschaltung gelieferten Werte nehmen,
- eine Subtraktionsschaltung (44), die den Wert, der von einem der den Imaginärteil nehmenden Mittel geliefert wird, von dem Wert subtrahiert, der von dem anderen den Imaginärteil nehmenden Mittel geliefert wird, derart, daß man erhält

$$\Delta(\delta_1, l) = \left[\varphi'_{j+1,k1} - \varphi'_{j,k1}\right] - \left[\varphi'_{j+1,k2} - \varphi'_{j,k2}\right]$$

- eine Addierschaltung (45), welche die von den beiden den Imaginärteil nehmenden Mitteln (42, 42') gelieferten Werte addiert,
- eine Multiplikationsschaltung, die den Wert $\Delta(\delta_1, l)$ mit einem Koeffizient

$$\frac{k_1 - k_2}{k_1 + k_2}$$

multipliziert,
- eine Subtraktionsschaltung (47), die den von der Multiplikationsschaltung gelieferten Wert von dem von der Additionsschaltung gelieferten Wert subtrahiert, so daß man erhält

$$\Delta(\delta_2, \delta_3, l) = \left[\varphi'_{j+1,k1} - \varphi'_{j,k1}\right] + \left[\varphi'_{j+1,k2} - \varphi'_{j,k2}\right] - \frac{k1+k2}{k1-k2}\Delta(\delta_1, l)$$

5. Vorrichtung nach Anspruch 4, dadurch gekennzeichnet, daß sie am Ausgang jedes den Imaginärteil nehmenden Mittels eine Vorrichtung zur Mittelung (43, 43') umfaßt.

6. Vorrichtung nach einem der Ansprüche 4 und 5, dadurch gekennzeichnet, daß sie außerdem eine Schaltung zur Steuerung der Analysezeit (48) umfaßt, die es ermöglicht, die Analysezeit, nämlich den Wert von 1, zu ändern.

7. Vorrichtung nach Anspruch 5, dadurch gekennzeichnet, daß die Divisionsschaltungen und die den Imaginärteil der von jeder Divisionschaltung gelieferten Werte nehmenden Mittel durch einen PROM-Winkelspeicher, der die Transformation von kartesischen in Polarkoordinaten durchführt, und durch zwei Subtraktionsschaltungen ersetzt sind.

**Claims**

1. Method of realigning the oscillators of a receiver comprising a high frequency/intermediate frequency translation oscillator, an intermediate frequency/baseband translation oscillator, and a sampling oscillator receiving a signal modulated by at least one circuit for inverse fast Fourier Transform FFT$^{-1}$ computation according to a multicarrier modulation of OFDM (Orthogonal Frequency Division Multiplexing) type, which signal is transmitted in packets or blocks of q samples, the spectrum of the said signal comprising two pilot lines having a fixed frequency difference between them, the method being characterized by the computation of the variation of the phases of each of the two pilot lines taken from two different packets with the aid of a fast Fourier Transform on reception, the said oscillators being frequency adjustable and the result of the said computation serving to set the frequency of the oscillator of the sampling and the frequency of at least one of the other two oscillators.

2. Method according to Claim 1, characterized in that the modification of the frequency of the intermediate frequency/baseband translation oscillator is carried out by computing:

$$\Delta\left(\delta_2,\delta_3,l\right)=\left[\varphi'_{j+l,k_1}-\varphi'_{j,k_1}\right]+ \left[\varphi'_{j+l,k_2}-\varphi'_{j,k_2}\right]-\frac{k_1+k_2}{k_1-k_2}\Delta\left(\delta_1,l\right)$$

in which $\varphi'_{j,k_1}$ and $\varphi'_{j,k_2}$ are respectively the phase given by the circuit for fast Fourier Transform computation on reception for the carriers $k_1$ and $k_2$ for an input sample block j and $\varphi'_{j+l,k_1}$ and $\varphi'_{j+l,k_2}$ being the phase for a block separated from the block j by q × l samples, and

$$\Delta\left(\delta_1,l\right)=\left[\varphi'_{j+l,k_1}-\varphi'_{j,k_1}\right]-\left[\varphi'_{j+l,k_2}-\varphi'_{j,k_2}\right]$$

and by modifying the frequency as a function of the value of $\Delta(\delta_2, \delta_3, l)$, the oscillator being correctly adjusted when: $\Delta(\delta_2,\delta_3,l)=0$.

3. Method according to Claim 1, characterized in that the modification of the frequency of the oscillator giving the sampling frequency is carried out by computing:

$$\Delta\left(\delta_1,l\right)=\left[\varphi'_{j+l,k_1}-\varphi'_{j,k_1}\right]-\left[\varphi'_{j+l,k_2}-\varphi'_{j,k_2}\right]$$

and by modifying the frequency as a function of the value of $\Delta(\delta_1, l)$, the oscillator being correctly adjusted when $\Delta(\delta_1,l) = 0$.

4. Device for realigning the oscillators of a receiver comprising a high frequency/intermediate frequency translation oscillator, an intermediate frequency/baseband translation oscillator, a sampling oscillator, a circuit for demodulation by Fast Fourier Transform FFT and receiving a signal modulated by at least one circuit for inverse fast Fourier transform FFT$^{-1}$ computation according to a multicarrier modulation of OFDM (Orthogonal Frequency Division Multiplexing) type, the spectrum of the said signal comprising at least two pilot lines $k_1$ and $k_2$ having a fixed frequency difference between them and a packet j of the said signal consisting of q samples, characterized in that it comprises at the output of the FFT circuit:

- means (40, 40') for delaying by q × l samples the values $X'_{k1}$ and $X'_{k2}$ arising from the FFT circuit (25) and corresponding to the pilot lines $k_1$ and $k_2$, l being any integer,

- two dividers (41, 41') carrying out respectively the division

$$\frac{x'_{j+l,k_1}}{x'_{j,k_1}} \text{ and } \frac{x'_{j+l,k_2}}{x'_{j,k_2}}$$

- two means (42, 42') handling the imaginary part of the values arising from each divider,
- a subtractor (44) subtracting the value arising from one of the means handling the imaginary part from the value arising from the other means handling the imaginary part so as to obtain,

$$\Delta(\delta_1, l) = [\varphi'_{j+l,k_1} - \varphi'_{j,k_1}] - [\varphi'_{j+l,k_2} - \varphi'_{j,k_2}]$$

- an adder (45) adding the values arising from the two means (42, 42') handling the imaginary part,
- a multiplier multiplying the value $\Delta(\delta_1, l)$ by a coefficient $\frac{k_1 - k_2}{k_1 + k_2}$
- a subtractor (47) subtracting the value arising from the multiplier from the value arising from the adder so as to obtain

$$\Delta(\delta_2, \delta_3, l) = [\varphi'_{j+l,k_1} - \varphi'_{j,k_1}] + [\varphi'_{j+l,k_2} - \varphi'_{j,k_2}] - \frac{k_1 + k_2}{k_1 - k_2} \Delta(\delta_1, l)$$

5. Device according to Claim 4, characterized in that it includes at the output of each means handling the imaginary part, an averaging device (43, 43').

6. Device according to either one of Claims 4 or 5, characterized in that it additionally includes an analysis time control circuit (48) allowing modification of the analysis time, namely the value of 1.

7. Device according to Claim 5, characterized in that the dividers and the means handling the imaginary part of the values arising from each divider are replaced by an angular PROM memory performing the cartesian-polar transformation and by two subtractors.

# FIG. 1

FIG_2

EP 0 513 313 B1

FIG. 3

FIG. 4